# EUROPEAN PATENT APPLICATION

(11) **EP 2 184 686 A1**
(43) Date of publication of application: **12.05.2010**
(21) Application number: 09151028.9
(22) Date of filing: 21.01.2009
(51) Int. Cl.: G06F 17/27, G06F 3/023

(54) **Method and system for generating derivative words**

(30) Priority: 07.11.2008 CN 200810218948
(71) Applicant: Guangdong Guobi Technology Co. Ltd., Guangzhou, Guangdong 51-075 (CN)
(72) Inventor: Gao, Jing-Lian, Guangzhou Guangdong 510075 (CN); Chen, Bing-Hui, Guangzhou Guangdong 510075 (CN)
(74) Representative: Gervasi, Gemma

(57) **Abstract**

The present invention provides a method for generating derivative words including the steps of: creating a number of arrays of derivative grammar rules; matching the inputting character information with the arrays of derivative grammar rules and obtaining the match arrays of derivative grammar rules; obtaining match words from the language database according to the condition arrays of the obtained arrays of derivative grammar rules and the inputting character information; and generating derivative words by adding the suffix letter character sequences of the obtained arrays of derivative grammar rules to the ends of the words. In accordance with the established grammar rules, the words in the language database can be converted to derivative words and the derivative words do not need to be stored in the language database. Therefore, the storage space of the language database can be remarkably reduced. The present invention also provides a system for generating derivative words.

## Description

### CROSS-REFERENCE TO RELATED APPLICATIONS

The present invention claims priority to Chinese Patent Application No. CN 200810218948.9 filed November 7, 2008, which is incorporated by reference herein in its entirety.

### FIELD OF THE INVENTION

The present invention relates to word input technologies for use in electronic devices and, more specifically, to a method and system for generating derivative words.

### BACKGROUND OF THE INVENTION

At present, most of embedded devices, such as mobile phone, PDA (personal digital assistant) and set-top box are programmed with word input software including a language database. For users, it is desirable that the language database can store as many words as possible. However, the storage space of the embedded device is generally very small and, therefore, the language database can only store considerably few words which are commonly used.

As it is well known in the art, each of the languages in Latin language family, for instance English and German, contains a lot of words which can generate derivative words by adding some suffix character sequences in accordance with certain grammar rules. If all of the derivative words are stored into the language database, it will inevitably expand the storage space of the language database. However, if the words stored in the language database can generate derivative words according to predetermined grammar rules, the derivative words will not have to be directly stored and, therefore, the storage space of the language database will be remarkably reduced.

Therefore, what is urgently needed now is to provide a method and system for generating derivative words which can reduce storage space of the language database.

### SUMMARY OF THE INVENTION

One object of the present invention is to provide a method for generating derivative words which can reduce the storage space of the language database.

In accordance with one embodiment of the present invention, a method for generating derivative words includes the steps of: 1) creating a plurality of arrays of derivative grammar rules, the arrays of derivative grammar rules each including a suffix letter character sequence and a condition array including a part of speech corresponding to that of the base word as required by the suffix letter character sequence; 2) inputting a user character sequence; 3) matching the user character sequence with each of the arrays of derivative grammar rules and obtaining the arrays of derivative grammar rules that matches with the user character sequence; 4) obtaining words meeting the requirement of the condition arrays of the obtained arrays of derivative grammar rules from a language database according to the user character sequence, generating derivative words by adding the suffix letter character sequences to the obtained words, and the suffix letter character sequences being included in the arrays of derivative grammar rules which include the condition arrays met by the obtained words.

In accordance with one embodiment of the method of the present invention, the arrays of derivative grammar rules further include suffix key character sequences corresponding to the suffix letter character sequences according to the function definition of the keys. The user character sequence is a user key character sequence. In step 3, the user key character sequence is compared with the suffix key character sequence of each of the arrays of derivative grammar rules. If the user key character sequence includes all or part of the key character of the suffix key character sequence at its end, the array of derivative grammar rule including the suffix key character sequence is obtained.

In accordance with one embodiment of the method of the present invention, the arrays of derivative grammar rules further include suffix key character sequences corresponding to the suffix letter character sequences according to the function definition of the keys. The user character sequence is a user key character sequence. The method further includes the step of converting the user key character sequence to a user letter character sequence according to the function definition of the keys. In step 3, the user letter character sequence is compared with the suffix letter character sequence of each of the arrays of derivative grammar rules. If the user letter character sequence includes all or part of the letter character of the suffix letter character sequence at its end, the array of derivative grammar rule including the suffix letter character sequence is obtained.

In accordance with one embodiment of the method of the present invention, the user character sequence is a user letter character sequence. In step 3, the user letter character sequence is compared with the suffix letter character sequence of each of the arrays of derivative grammar rules. If the user letter character sequence includes all or part of the letter character of the suffix letter character sequence at its end, the array of derivative grammar rule including the suffix letter character sequence is obtained.

In accordance with one embodiment of the method of the present invention, the comparison is carried out character by character in an order from back to front of letter character sequence.

In accordance with one embodiment of the method of the present invention, the user character sequence is a user key character sequence. Step 4 further includes obtaining words matching the user key character sequence from the language database, comparing the part of speech of each of the obtained words to the part of speech in each of the arrays of derivative grammar rules, and obtaining all of the words having the same part of speeches to any one of the part of arrays of derivative grammar rules.

In accordance with one embodiment of the method of the present invention, the user character sequence is a user key character sequence. The user key character sequence is converted to a user letter character sequence according to the function definition of the keys. Step 4 further includes: obtaining words matching the user letter character sequence from the language database, comparing the part of speech of each of the obtained words to the part of speech in each of the arrays of derivative grammar rules, and obtaining all of the words having the same part of speeches to any one of the part of arrays of derivative grammar rules.

In accordance with one embodiment of the method of the present invention, the user character sequence is a user letter character sequence. Step 4 further includes: obtaining words matching the user letter character sequence from the language database, comparing the part of speech of each of the obtained words to the part of speech in each of the arrays of derivative grammar rules, and obtaining all of the words having the same part of speeches to any one of the part of arrays of derivative grammar rules.

In accordance with one embodiment of the method of the present invention, the condition array further includes a second letter character sequence corresponding to that at the end of the base words as required by the suffix letter character sequence in accordance with the grammar rules.

According to one embodiment of the method of the present invention, each of the arrays of derivative grammar rules further includes a first letter character sequence that should be deleted from the ends of the base words according to the grammar rules when the derivative words are generated, as required by the corresponding suffix letter character sequence. Step 4 further includes a step of judging whether the end of one of the obtained words have the first letter character sequence in each of the obtained arrays of derivative grammar rules. If the judge result is yes, delete the first letter character sequence at the end of the word and add the suffix letter character sequence of the array of derivative grammar rule to the end of the remainder so as to generate a derivative word. If the judge result is no, add the suffix letter character sequence of the array of derivative grammar rule to the end of the word to generate a derivative word.

The other object of the present invention is to provide a system for generating derivative words which can reduce storage space of the language database.

In accordance with one embodiment of the present invention, a system for generating derivative words includes: an input device used for inputting user character sequences; a storage for storing a plurality of array of derivative grammar rule, each of the arrays of derivative grammar rules including a suffix letter character sequence and a condition array met by the base words, the condition array including a part of speech of the base words required by corresponding suffix letter character sequence; a first match processing module, used for matching the user character sequence with each of the arrays of derivative grammar rules and obtaining arrays of derivative grammar rules matching the character information; a second match processing module, used for obtaining words from the language database according to the user character sequence, and the obtained words meeting the requirement of the condition array in one of the arrays of derivative grammar rules obtained by the first match processing module; a derivative processing module, used for adding suffix letter character sequences to the obtained words so as to generate derivative words, the suffix letter character sequences taken from the arrays of derivative grammar rules including the condition arrays met by the words; and a language database, used for storing words.

According to one embodiment of the system of the present invention, the arrays of derivative grammar rules include suffix key character sequences corresponding to the suffix letter character sequences according to the function definition of the keys. The input device is a key input device and the inputting character information is a user key character sequence. The first match processing module compares the user key character sequence with the suffix key character sequence of each of the arrays of derivative grammar rules. If the user key character sequence includes all or part of the key character of the suffix key character sequence at its end, the first match processing module obtains the array of derivative grammar rule including the suffix key character sequence.

According to one embodiment of the system of the present invention, the system further includes a converting processing module used for converting the user key character sequences to user letter character sequences according to the function definition of the keys. The input device is a key input device and the inputting character information is a user key character sequence. The first match processing module compares the user letter character sequence with the suffix letter character sequence of each of the arrays of derivative grammar rules. If the user letter character sequence includes all or part of the letter character of the suffix letter character sequence at its end, the first match processing module obtains the array of derivative grammar rule including the suffix letter character sequence.

According to one embodiment of the system of the present invention, the input device is a handwritten input device and the inputting character information is a user letter character sequence. The first match processing module compares the user letter character sequence with the suffix letter character sequence of each of the arrays of derivative grammar rules. If the user letter character sequence includes all or part of the letter character of the suffix letter character sequence at its end, the first match processing module obtains the array of derivative grammar rule including the suffix letter character sequence.

According to one embodiment of the system of the present invention, the comparison of the first match processing module is carried out character by character in an order from back to front of the letter character sequence.

According to one embodiment of the system of the present invention, the input device is a key input device and the inputting character information is a user key character sequence. The second match processing module includes: a word searching processing module, used for obtaining words matching the user key character sequence inputted by the key input device from the language database; a first comparing processing module, used for comparing the part of speech of each of the words obtained by the searching processing module with the part of speech in each of the arrays of derivative grammar rules obtained by the first match processing module, and obtaining all of the words which have the same part of speeches as any one of the part of arrays of derivative grammar rules.

According to one embodiment of the present invention, the system further includes a converting processing module used for converting the user key character sequences to user letter character sequences according to the function definition of the keys. The input device is a key input device and the inputting character information is a user key character sequence. The second match processing module further includes: a word searching processing module, used for obtaining words matching the user letter character sequence converted by the converting processing module from the language database; a first comparing processing module, used for comparing the part of speech of each of the words obtained by the searching processing module with the part of speech in each of the arrays of derivative grammar rules obtained by the first match processing module, and obtaining all of the words having the same part of speeches to any one of the part of arrays of derivative grammar rules.

According to one embodiment of the system of the present invention, the input device is a handwritten input device, and the inputting character information is a user letter character sequence. The second match processing module further includes: a word searching processing module, used for obtaining words matching the user letter character sequence inputted by the handwritten input device from the language database; a first comparing processing module, used for comparing the part of speech of each of the words obtained by the searching processing module with the part of speech in each of the arrays of derivative grammar rules obtained by the first match processing module, and obtaining all of the words having the same part of speeches to any one of the part of arrays of derivative grammar rules.

According to one embodiment of the system of the present invention, each of the arrays of derivative grammar rules further includes a second letter character sequence that the base words have at its end as required by the corresponding suffix letter character sequence according to the grammar rules.

According to one embodiment of the system of the present invention, each of the arrays of derivative grammar rules further includes a first letter character sequence that should be deleted from the ends of the base words as required by the corresponding suffix letter character sequence in accordance with the grammar rules when the derivative words are generated. The derivative processing module includes: a second comparing processing module, used for comparing the ends of words obtained by the second match processing module with the first letter character sequences of the arrays of derivative grammar rules obtained by the first match processing module. If one of the words ends with any one of the first letter character sequences, the first letter character sequence at the end of the word is deleted; a generating processing module, used for adding the suffix letter character sequences of arrays of derivative grammar rules to the words processed by the second comparing processing module to generate derivative words.

Compared with the prior art technologies, the present invention at least has the following advantages. The present invention creates a plurality of arrays of derivative grammar rules, matches the inputting character information with the arrays of derivative grammar rules, and obtains the match arrays of derivative grammar rules. According to the condition arrays of the obtained arrays of derivative grammar rules and the inputting character information, the present invention obtains match words from the language database. Then the derivative words are generated via adding the suffix letter character sequences of the obtained arrays of derivative grammar rules to the ends of the words. In accordance with predetermined grammar rules, the words in the language database are converted to derivative words. Therefore, the derivative words do not need to be stored in the language database, and the storage space of the language database can be remarkably reduced.

The accompanying drawings, which are incorporated in and constitute a part of the present specification, illustrate embodiments of the invention and serve to explain the principles of the present invention. The advantages and the other aspects of the invention will be much clearer through the detailed description, in which:

### BRIEF DESCRIPTION OF THE DRAWINGS

FIG. 1 is a flowchart of a method for generating derivative words according to a preferred embodiment of the present invention;

FIG. 2 is a flowchart of a preferred embodiment of step S3 as shown in FIG. 1;

FIG. 3 is a flowchart of a preferred embodiment of step S4 as shown in FIG. 1;

FIG. 4 is a flowchart of step A in the method in accordance with a preferred embodiment of the present invention;

FIG. 5 is a flowchart of another preferred embodiment of step S3 as shown in FIG. 1;

FIG. 6 is a flowchart of another preferred embodiment of step S4 as shown in FIG. 1;

FIG. 7 is a flowchart of a preferred embodiment of step S406 of the method in accordance with the present invention;

FIG. 8 is a schematic view of an input device for use in the system according to a preferred embodiment of the present invention;

FIG. 9 is a schematic block diagram of the system for generating derivative words in accordance with a preferred embodiment of the present invention;

FIG. 10 is a schematic block diagram of a second match processing module for use in the system according to a preferred embodiment of the present invention; and

FIG. 11 is a schematic block diagram of a derivative processing module for use in the system in accordance with a preferred embodiment of the present invention.

### DETAILED DESCRIPTION OF THE INVENTION

The present invention is applicable to all of the languages in Latin language family, including English, German, French, Turkish and so on, and mainly used in mobile phones, PDAs, set-top boxes and other electronic devices.

A method for generating derivative words in accordance with the present invention includes the steps of:1) creating a plurality of arrays of derivative grammar rule, each of the arrays of derivative grammar rules including a suffix letter character sequence and a condition array as required by the base words, the condition array including a part of speech of the base words required by corresponding suffix letter character sequence; 2) inputting a user character sequence; 3)matching the user character sequence with each of the arrays of derivative grammar rules and obtaining the arrays of derivative grammar rules matching with the user character sequence; 4) obtaining words from the language database according to the user character sequence, the words meeting the requirement of the condition arrays of the obtained arrays of derivative grammar rules; and generating derivative words by adding the suffix letter character sequences to the obtained words, the suffix letter character sequences being included in the arrays of derivative grammar rules which include the condition arrays met by the obtained words.

There are two ways to input the user character sequence. One way is to input a key character sequence by pressing the keys of a key input device. The key input device is a physical keyboard or a virtual keyboard. The other way is to input a letter character sequence by writing on a handwritten input device. The two input manner can both be applied to the present invention.

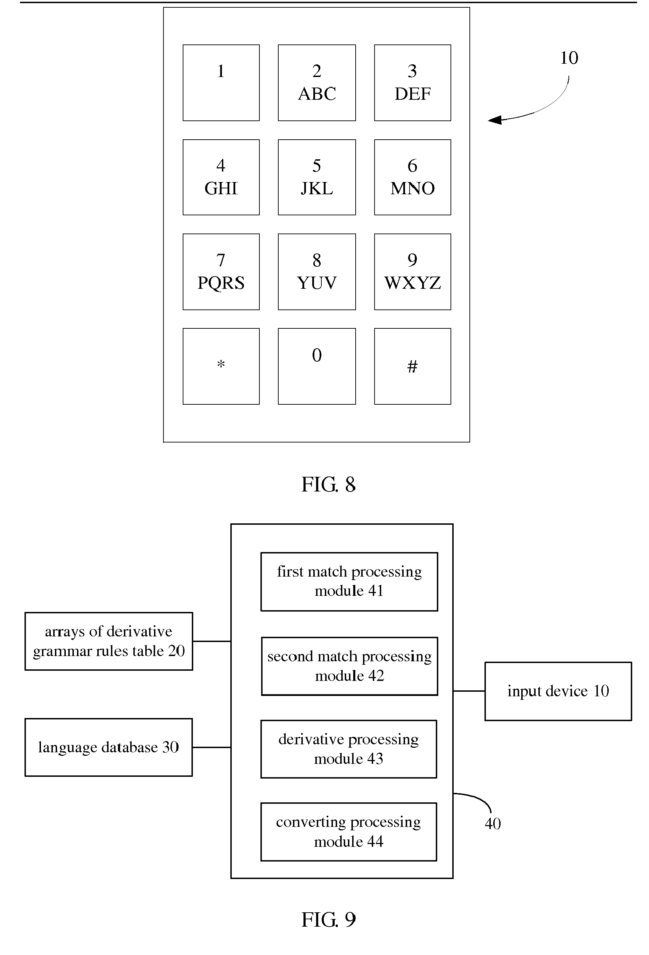

The relations between the key character information and the letter character information will now be described in detail with reference to the accompanying drawings. Referring to FIG. 8, the input device is a key input device, and more specifically, is a number keyboard. According to the function definition of the keys, the keys 2 to 9 are used for inputting letter characters and Arabic characters, i.e. pressing any key means inputting a group of letter character or an Arabic character. In the specification, each of the Arabic characters is written for representing the key character information which is defined on corresponding key. For instance, the number "2" are written for representing the key character. In accordance with the function definition of the keys, the key "2" corresponds to the letter character "A", "B", and "C". The preferred embodiments of the present invention will now be described in detail by illustrating with reference to the accompanying drawings.

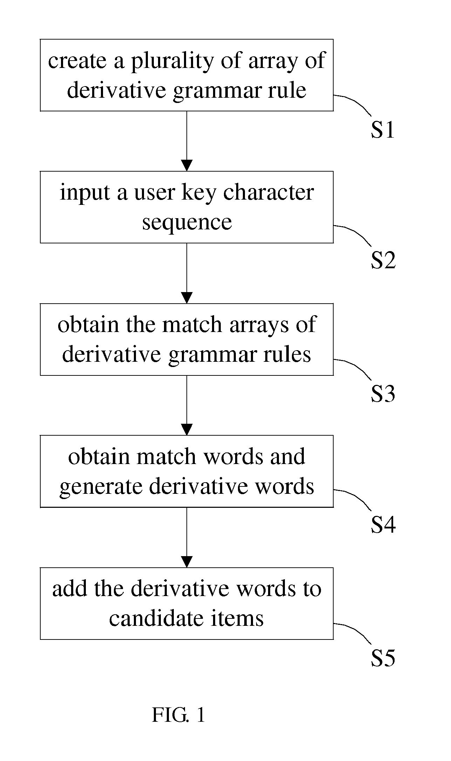

Referring to FIG. 1, a method for generating derivative words in accordance with a preferred embodiment of the present invention includes the following steps:

Step S1: creating a plurality of array of derivative grammar rule according to the grammar rules, each of the arrays of derivative grammar rules including a suffix letter character sequence, a suffix key character sequence corresponding to the suffix letter character sequence, a condition array and a first letter character sequence. The condition array includes a part of speech required by the suffix letter character and a second letter character sequence.

The suffix key character sequence is a key character information sequence corresponding to the suffix letter character sequence according to the function definition of the keys. Take the keyboard in FIG. 8 as an example, when the suffix letter character sequence is "ing", the suffix key character sequence corresponding to the suffix letter character sequence is "464". The part of speech in each array of derivative grammar rule is a part of speech of the base words, which is required by the corresponding suffix letter character sequence. For example, when the suffix letter character sequence is "ing", the part of speech of the base words must be a verb.

The second letter character sequence is one or more letter character sequences at the ends of the base words as required by the corresponding suffix letter character sequence according to the grammar rules. For example, the English suffix letter character sequence "es" requires that each of the corresponding base words has a letter character sequence "x", "s", "ch" or "sh" at the ends. Therefore, in the condition array, the second letter character sequence corresponding to the suffix letter character sequence "es" is "x", "s", "ch" and "sh".

The first letter character sequence is a letter character sequence which will be deleted from the ends of the base words as required by the corresponding suffix letter character sequence when the derivative words are generated according to the grammar rules. For example, in English, the suffix letter character sequence "er" requires that the base words ended with letter character sequence "e" delete the letter character sequence "e" at their ends before adding the suffix letter character sequence "er". Therefore, in the array of derivative grammar rule, the first letter character sequence corresponding to the suffix letter character sequence "er" is "e".

Step S2: inputting a user key character sequence.

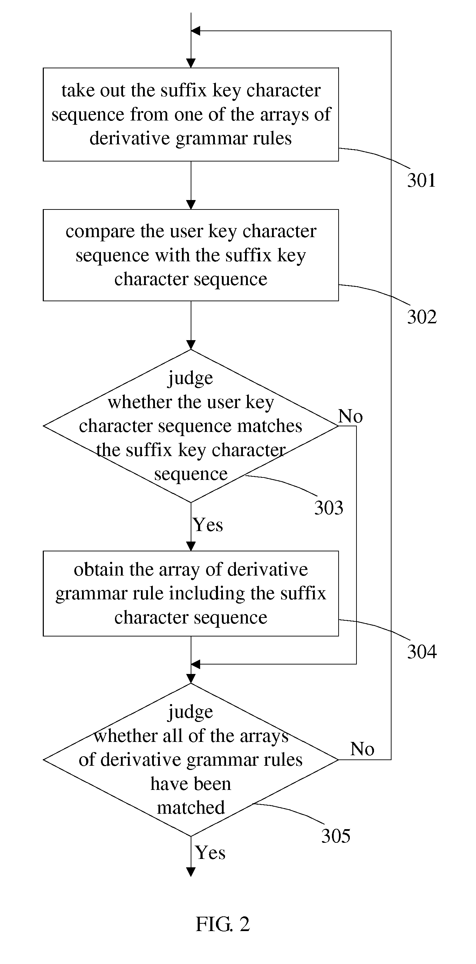

Step S3: matching the user key character sequence with each of the arrays of derivative grammar rules and obtaining the arrays of derivative grammar rules matching the user key character sequence. Referring particularly to FIG. 2, step S3 further includes the following steps:

301: taking out an array from the arrays of derivative grammar rules, and taking out the suffix key character sequence from the array of derivative grammar rule that have been taken out.

302: comparing the user key character sequence in step S2 with the suffix key character sequence which has been taken out in step 301 character by character in an order from back to front. If the user key character sequence includes all of the key characters of the suffix key character sequence in an order from the end of the user key character sequence to the front, the user key character sequence completely matches the suffix key character sequence. If the user key character sequence includes part of the key characters of the suffix key character sequence in an order from the end of the user key character sequence to the front, the user key character sequence matches the suffix key character sequence partly. Otherwise, the user key character sequence does not match the suffix key character sequence.

For example, when the user key character sequence is 9675464, and the suffix key character sequence is 464, the user key character sequence 9675464 is compared with the suffix key character sequence 464 in an order from back to front. Because the user key character sequence 9675464 includes all of the key characters of the suffix key character sequence 464 in sequence, therefore the user key character sequence 9675464 completely matches the suffix key character sequence 464.

For example, when the user key character sequence is 967546 and the suffix key character sequence is 464. The user key character sequence 967546 is compared with the suffix key character sequence 464 in an order from back to front. Because the user key character sequence 967546 includes the characters 46 in the suffix key character sequence 464, therefore the user key character sequence 967546 partly matches the suffix key character sequence 464.

303: judging whether the user key character sequence matches the suffix key character sequence in accordance with the comparison result in step 302. If the user key character sequence completely or partly matches the suffix key character sequence, turn to step 304. If the user key character sequence does not match the suffix key character sequence, turn to step 305.

304: obtaining the suffix key character sequence matching with the user key character sequence in step 303 and obtaining array of derivative grammar rule including the suffix key character sequence.

305: judging whether the user key character sequence has been matched with the suffix key character sequences of all the arrays of derivative grammar rules. If the judge result is yes, turn to step S4. If the judge result is no, turn to step 301.

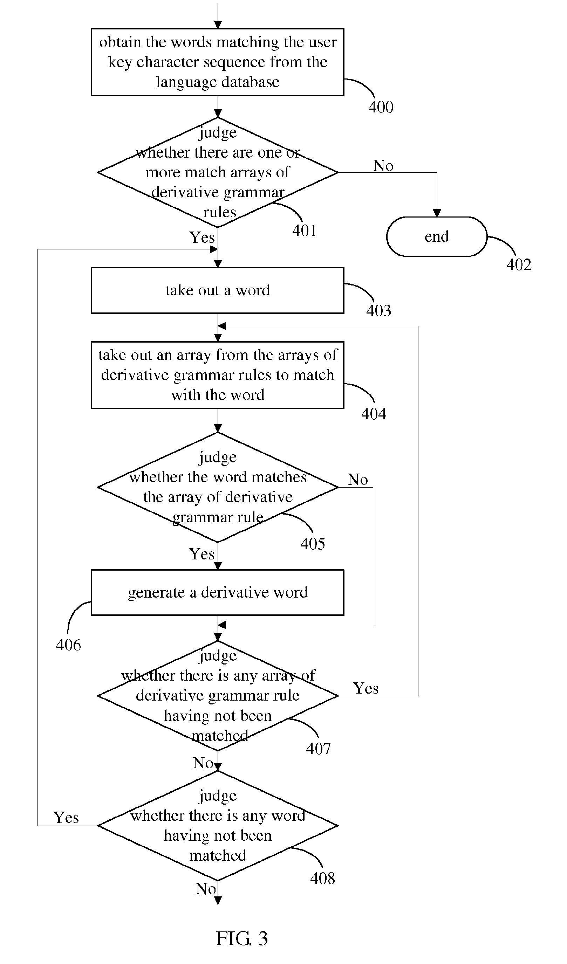

Step S4: obtaining words meeting the requirement of the condition arrays in the obtained arrays of derivative grammar rules from the language database according to the user key character sequence. Referring specifically to FIG. 3, step S4 further includes the following steps.

400: due to the language database have stored a plurality of key character sequence corresponding to the words, the key character sequences is the key character information corresponding to the letter character sequences of the words. The user key character sequence is compared with the key character sequence of each of the words in the language database. The words matching the user key character sequence is obtained from the language database. This step includes but not limited to the following two cases.

The first case: according to the match result of step S3 and the grammar rule, delete all or part of the suffix key character sequence at the end of the user key character sequence and compare the remainder with the key character sequences of the words in the language database. If any word is as same as the remainder, obtain it.

For example, if the user key character sequence is 967546, the letter character sequence corresponding to the user key character sequence is "workin", and the key character sequence of the word corresponding to the word "work" stored in the language database is 9675. Because the user key character sequence 967546 includes a part "46"of the characters of the suffix key character sequence 464, the match result in step S3 is the user key character sequence 967546 matches the suffix key character sequence 464. In this step, the part "46"of the characters of the user key character sequence 967546 should be deleted, and the remainder 9675 is compared with the key character sequences of the words stored in the language database. Therefore, the word "work" is obtained.

The second case: according to the match result of step S3 and the grammar rule, delete all or part of the suffix key character sequence at the end of the user key character sequence, add one or more key characters to the remainder, and compare the new key character sequence to the key character sequences of the words stored in the language database, so as to obtain one or more match words.

For example, the user key character sequence is 35464, the letter character sequence corresponding to the user key character sequence is "fling", and the key character sequence of the word corresponding to the word "fly" stored in the language database is 359. Because the user key character sequence 35464 includes all of the key characters of the suffix key character sequence 464, the match result in step S3 is the user key character sequence 35464 matches the suffix key character sequence 464. In this step, the part "464"of the characters of the user key character sequence 35464 should be deleted, and a key character "9" should be added to the remainder 35. The new key character sequence 359 is compared with the key character sequences of the words stored in the language database. Therefore, the word "fly" is obtained.

401: according to the match result of step S3, judging whether there are one or more arrays of derivative grammar rules matching the user key character sequence. If the judge result is yes, turn to step 403. If the judge result is no, turn to step 402.

402: finishing the process.

403: taking out a word from the words obtained in step 400 and obtaining the part of speech of the obtained word.

404: taking out an array from the arrays of derivative grammar rules obtained in step S3 and matching the word taken out in step 403 with the condition array of the array of derivative grammar rule. If the condition array of the array of derivative grammar rule has no second letter character sequence and the part of speech of the word is the same as that of the condition array, the word meets the requirement of the condition array, i.e. the word matches the array of derivative grammar rule. If the part of speech of the word is different from that of the condition array, the word does not match the array of derivative grammar rule. In the case that the condition array of the array of derivative grammar rule includes a second letter character sequence, the characters at the end of the word is compared with the second letter character sequence. If the word includes a letter character sequence of the second letter character sequence at the end thereof and the part of speech of the word is as same as that of the condition array, then the word meets the requirement of the condition array, i.e. the word matches the array of derivative grammar rule. Otherwise, the word does not match the array of derivative grammar rule.

405: according to the match result of step 404, judging whether the word matches the array of derivative grammar rule. If the judge result is yes, turn to step 406. If the judge result is no, turn to step 407.

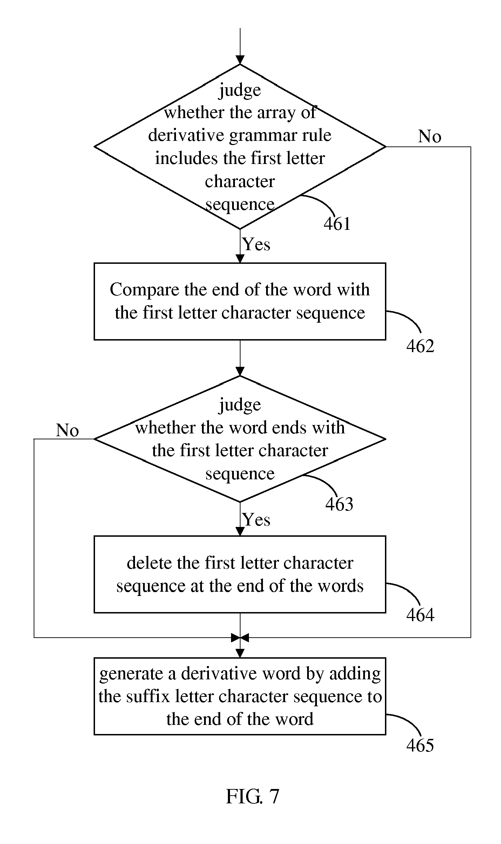

406: adding the suffix letter character sequence of the array of derivative grammar rule including the condition array matching the obtained word to the end of the obtained word, so as to generate a derivative word. Referring particularly to FIG. 7, this step further includes the following steps:

461: judging whether the array of derivative grammar rule includes a first letter character sequence. If the judge result is yes, turn to step 462. If the judge result is no, turn to step 465.

462: comparing the characters at the end of the word with the first letter character sequence in an order from back to front.

463: judging whether the word is ended with the first letter character sequence of the array of derivative grammar rule. If the judge result is yes, turn to step 464. If the judge result is no, turn to step 465.

464: deleting the letter character sequence which is the same to the first letter character sequence at the end of the word.

465: adding the suffix letter character sequence included in the array of derivative grammar rule to the end of the word, so as to generate a derivative word.

407: judging whether the word has been matched with all of the arrays of derivative grammar rules obtained in step S4. If the judge result is yes, turn to step 408. If the judge result is no, return to step 404.

408: judging whether there is any word obtained in step S3 having not been matched. If the judge result is yes, turn to step 403. If the judge result is no, return to step S5.

Step S5: arranging all of the derivative words according to matching degree and use frequency, and adding the arranged derivative words to candidate items which will be chosen by the user.

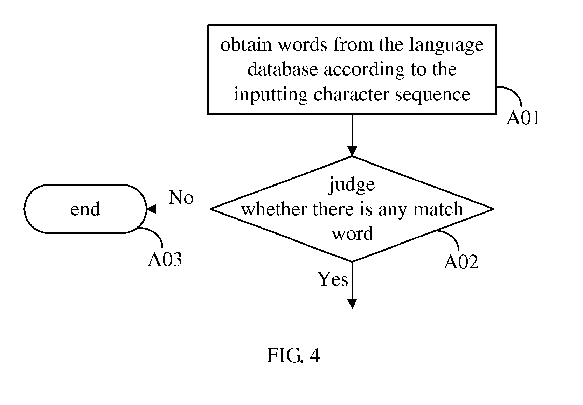

According to an alternative embodiment of the present invention, to simplify procedure, the operation can be set to end immediately when the user inputting character sequence is wrong. Referring particularly to FIG. 4, the method in accordance with one alternative embodiment of the present invention further includes a step Abetween step S2 and S3. Step A includes steps as following:

A01: searching the language database to find the words matching the user character sequence of step S2, wherein the user character sequence can be a user key character sequence or a user letter character sequence.

A02: judging whether the language database includes some words matching the user character sequence in accordance with the searching result in step A01. If the judge result is yes, turn to step S3. If the judge result is no, turn to step A03.

A03: finishing the process.

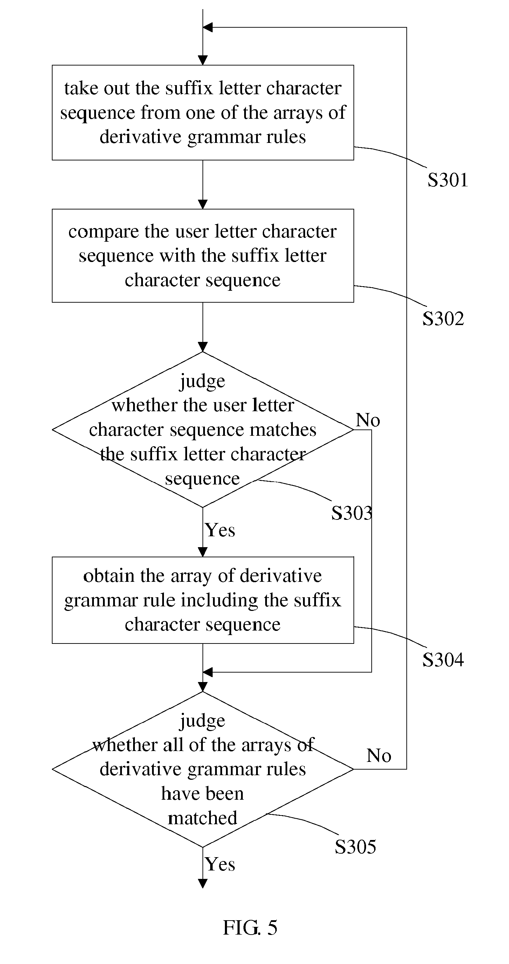

According to yet another alternative embodiment of the present invention, step S3 can further includes a step of matching a user letter character sequence with the suffix letter character sequences of the arrays of derivative grammar rules. The user letter character sequence could be a user letter character sequence inputted via writing on a handwritten input device in step S2, or a user letter character sequence converted from a user key character sequence inputted by a key input device in step S2 according to the function definition of the keys. Arrays of derivative grammar rules corresponding to the user letter character sequence are obtained by matching. Referring specifically to FIG. 5, this step further includes the following steps:

S301: taking out a suffix letter character sequence from one of the arrays of derivative grammar rules.

S302: comparing the user letter character sequence with the suffix letter character sequence which has been taken out in step S301 via matching each character in an order from right to left. If the user letter character sequence includes all of the key characters of the suffix letter character sequence in an order from the end to the front of the user letter character sequence, the user letter character sequence completely matches the suffix letter character sequence. If the user letter character sequence includes part of the letter characters of the suffix character sequence in an order from the end of the user letter character sequence to the front, the user letter character sequence partly matches the suffix letter character sequence. Otherwise, the user letter character sequence does not match the suffix letter character sequence.

For example, if the user letter character sequence is "working" and the suffix letter character sequence is "ing". The letter character sequence "working" is compared with the suffix letter character sequence "ing". Because the letter character sequence "working" includes all of the key characters of the suffix letter character sequence "ing" in sequence, the letter character sequence "working" completely matches the suffix letter character sequence "ing".

For example, if the user letter character sequence is "workin" and the suffix letter character sequence is "ing", the letter character sequence "workin" is compared with the suffix letter character sequence "ing". Because the letter character sequence "workin" includes the letter character sequence "in" in sequence, the letter character sequence "workin" partly matches the suffix letter character sequence "ing".

For example, if the user letter character sequence is "workk" and the suffix letter character sequence is "ing", the letter character sequence "workk" is compared with the suffix letter character sequence "ing". The letter character sequence "workk" does not match the suffix letter character sequence "ing".

For example, if the user letter character sequence is "workign" and the suffix letter character sequence is "ing", the letter character sequence "workign" is compared with the suffix letter character sequence "ing". The letter character sequence "workign" does not match the suffix letter character sequence "ing".

S303: according to the comparison result of step S302, judging whether the user letter character sequence matches the suffix letter character sequence. If the user letter character sequence completely or partly matches the suffix letter character sequence, turn to step S304. If the user letter character sequence does not match the suffix letter character sequence, turn to step S305.

S304: obtaining the suffix character sequence matching the user letter character sequence from step S303 and obtaining array of derivative grammar rule including the suffix character sequence.

S305: judging whether the user letter character sequence has been matched with the suffix letter character sequences of all the arrays of derivative grammar rules. If the judge result is yes, turn to step S4. If the judge result is no, turn to step S301.

According to an alternative embodiment of the present invention, the user key character sequence inputted in step S2 can be converted to user letter character according to the function definition of the keys. In this case, step S4 also can be carried out as following. Obviously, even though the user key character sequence of step S2 is inputted by a handwritten input device, the step S4 still can be carried out in the same manner. Referring particularly to FIG. 7, this step further includes the following steps:

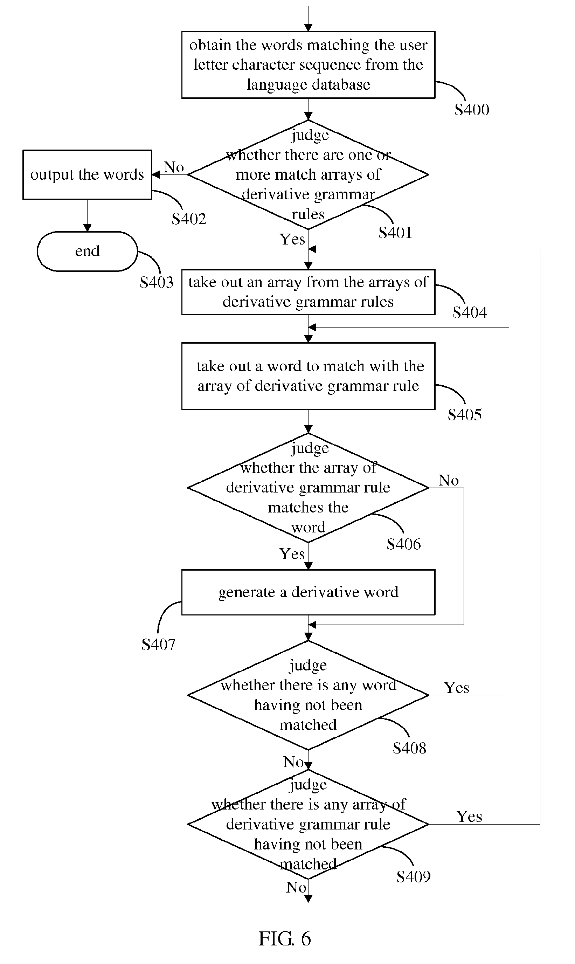

Referring also to FIG. 6, the step further including the following steps:

S400: obtaining the words matching the user letter character sequence from the language database. This step includes but is not limited to the two following cases:

The first case: delete all or part of the suffix letter character sequence at the end of the user letter character sequence according to the match result of step S3 and the grammar rule and compare the remainder with the letter character sequences of the words stored in the language database. If any word is the same to the remainder, obtain it.

The second case: according to the match result of step S3 and the grammar rule, delete all or part of the suffix letter character sequence at the end of the user letter character sequence, add one or more letter characters to the remainder, and compare the new letter character sequence with the letter character sequences of the words stored in the language database, so as to obtain one or more matching words.

S401: according to the match result of step S3, judging whether there are one or more match arrays of derivative grammar rules. If the judge result is yes, turn to step S404. If the judge result is no, turn to step S402.

S402: outputting the match words obtained in step S400.

S403: ending the process.

S404: taking out an array from the arrays of derivative grammar rules as obtained in step S3, and obtaining the condition array of the array of derivative grammar rule.

S405: taking out a word from the words obtained in step S400 and obtaining the part of speech of the word as obtained, matching the condition array of the array of derivative grammar rule obtained in step S404 with the word which has been taken out. The matching process has no difference from that of the step 404 in the embodiment as previously described in detail and, consequently, will not be described in detail here any more.

S406: judging whether the condition array matches the word according to the match result of step S405. If the judge result is yes, turn to step S407. If the judge result is no, turn to step S408.

S407: adding the suffix letter character sequence of the array of derivative grammar rule to the end of the obtained word to generate a derivative word. The details of the step can particularly refer to FIG. 8 and corresponding description as detailed in the above embodiment and, therefore, will not be described in detail any more.

S408: judging whether the arrays of derivative grammar rules taken out from step S404 have been matched with all of the words obtained in S400. If the judge result is yes, return to step S405. If the judge result is no, turn to step S409.

S409: judging whether there is any array of derivative grammar rule obtained in step S3 has not been matched. If the judge result is yes, return to step S404. If the judge result is no, turn to step S410.

S410: outputting the derivative words generated.

The system for generating derivative words in accordance with a preferred embodiment of the present invention will now be described in detail with reference to FIGS. 8 to 11. Referring particularly to FIG. 9, the system for generating derivative words in accordance with the preferred embodiment of the present invention includes an input device 10, a storage 20 used for storing arrays of derivative grammar rules, a language database 30 and a processor 40.

Referring to FIG. 8, the input device 10 is a number keyboard. The keyboard includes ten number keys 0 to 9. According to the function definition of each key, the key character inputted by each key corresponds to a letter character sequence. The keyboard is used for inputting user key character sequences.

The language database 30 is used for storing words and the part of speech of each word.

The storage 20 for storing arrays of derivative grammar rules stores a plurality of arrays of derivative grammar rule. Each of the arrays of derivative grammar rules includes a suffix letter character sequence, a suffix key character sequence corresponding to the suffix letter character sequence, a condition array as well as a first letter character sequence. The condition array includes a part of speech of the base words required by corresponding suffix letter character sequence and a second letter character sequence. The suffix key character sequence is a key character sequence corresponding to the suffix letter character sequence. The first letter character sequence is a letter character sequence which will be deleted from the ends of the base words when the derivative words are generated as required by corresponding suffix letter character sequence in accordance with the grammar rules, while the second letter character sequence is one or more letter character sequences at the ends of the base words as required by the corresponding suffix letter character sequence according to the grammar rules.

The processor 40 has a first match processing module 41, a second match processing module 42, a derivative processing module 43, and a converting processing module 44.

The first match processing module 41 is used for comparing the user key character sequence inputted by the input device 10 with the suffix key character sequence of each array of derivative grammar rule in the storage 20 for storing arrays of derivative grammar rules in an order from back to front. If the user key character sequence includes all of the key characters of the suffix key character sequence in an order from the end of the user key character sequence to the front, the suffix key character sequence completely matches the user key character sequence, i.e. the user key character sequence matches the array of derivative grammar rule including the suffix key character sequence. If the user key character sequence includes part of the key characters of the suffix key character sequence in an order from the end of the user key character sequence to the front, the suffix key character sequence partly matches the user key character sequence, i.e. the user key character sequence matches the array of derivative grammar rule including the suffix key character sequence. Otherwise, the user key character sequence does not match the array of derivative grammar rule including the suffix key character sequence. The first match processing module 41 can obtain the arrays of derivative grammar rules matching the user key character sequence by comparison.

The converting processing module 44 is used to convert a user key character sequence to a corresponding user letter character sequence according to the function definition of the keys. The second match processing module 42 is used for obtaining words matching the user letter character sequence and the arrays of derivative grammar rules obtained by the first match processing module 41 from the language database 30.

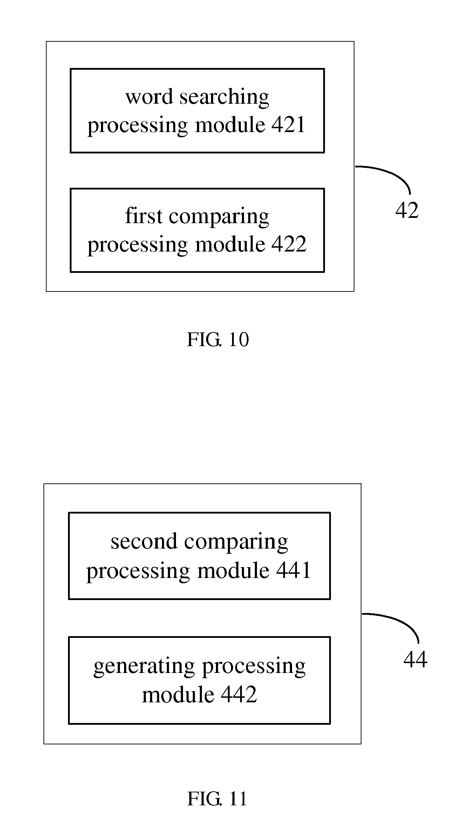

Referring to FIG. 10, the second match processing module 42 includes a word searching processing module 421 and a first comparing processing module 422. The word searching processing module 421 is used to search the language database 30 according to the user letter character sequence for obtaining words matching the user letter character sequence and the part of speeches of the obtained words. The words can be obtained in but is not limited to the following two manners.

The first manner: according to the match result of the first match processing module 41 and the grammar rule, the second match processing module 42 deletes all or part of the letter characters of the suffix letter character sequence at the end of the user letter character sequence. The remainder of the user letter character sequence is compared with the letter character sequences of the words stored in the language database. If any word is as same as the remainder, obtain it.

The second manner: according to the match result of the first match processing module 41 and the grammar rule, the second match processing module 42 deletes all or part of the letter characters of the suffix letter character sequence at the end of the user letter character sequence. One or more letter characters are added to the remainder of the user letter character sequence. The new letter character sequence is then compared with the letter character sequences of the words stored in the language database. Therefore, one or more match words are obtained.

The first comparing processing module 422 matches the words obtained by the searching processing module 421 with the condition array of each array of derivative grammar rule obtained by the first match processing module 41 and obtains the words which meet the requirement of each condition array. In other words, the first comparing processing module 422 obtains the words matching each of the arrays of derivative grammar rules. Specifically, if the condition array of one array of derivative grammar rule has no second letter character sequence, the first comparing processing module 422 compares the part of speech of each word obtained by the searching processing module 421 with that of the condition array of each array of derivative grammar rule. If the two part of speeches are the same, the word meets the requirement of the condition array, i.e. the word matches the array of derivative grammar rule including the condition array. If the two part of speeches are different, the word does not match the array of derivative grammar rule. If the condition array of one array of derivative grammar rule includes a second letter character sequence, the first comparing processing module 422 compares the part of speech of each word obtained via the searching processing module 421 with that of the condition array of each array of derivative grammar rule, and compares the letter characters at the end of each word with the second letter character sequence. If the word includes the second letter character sequence at its end and the part of speech of the word is the same as that in the array of derivative grammar rule, then the word meets the requirement of the condition array, i.e. the word matches the array of derivative grammar rule including the condition array therein. Otherwise, the word does not match the array of derivative grammar rule.

The derivative processing module 43 is used for generating derivative words according to the words obtained by the second match processing module 42 and the arrays of derivative grammar rules matching the words. Referring particularly to FIG. 11, the derivative processing module 43 includes a second comparing processing module 431 and a generating processing module 432. If one array of the arrays of derivative grammar rules obtained by the first match processing module 41 has no first letter character sequence, the generating processing module 432 adds the suffix letter character sequence of the array of derivative grammar rule to the ends of the words to generate derivative words. If one array of the arrays of derivative grammar rules obtained by the first match processing module 41 has a first letter character sequence, then the second comparing processing module 431 compares the ends of the words obtained by the second match processing module 42 with the first letter character sequence of the array of derivative grammar rule. If one of the words does not end with the first letter character sequence, the generating processing module 432 adds the suffix letter character sequence of the array of derivative grammar rule to the end of the word to generate a derivative word. If one of the words ends with the first letter character sequence, the generating processing module 432 deletes the first letter character sequence from the end of the word and adds the suffix letter character sequence of the array of derivative grammar rule to the end of remainder of the word, so as to generate a derivative word.

In accordance with one alternative embodiment of the system of the present invention, the input device is a handwritten input device. The handwritten input device is used for inputting user letter character sequence into the processor 40.

According to yet another embodiment of the system for generating derivative words of the present invention, the first match processing module can obtain the match arrays of derivative grammar rules by comparing the user letter character sequence with the suffix letter character sequence of each array of derivative grammar rule. In this case, the input device of the system may be a handwritten input device used for inputting user letter character sequences or a key input device used for inputting user key character sequences. In accordance with the function definition of the keys, the user key character sequences can be converted to user letter character sequences by a converting processing module.

If the user letter character sequence includes all of the letter characters of the suffix letter character sequence in an order from the end to the front of the user letter character sequence, the user letter character sequence completely matches the suffix letter character sequence. In other words, the user letter character sequence matches the array of derivative grammar rule including the suffix letter character sequence. If the user letter character sequence only includes part of the letter characters of the suffix letter character sequence in an order from the end to the front of the user letter character sequence, the user letter character sequence partly matches the suffix letter character sequence, i.e. the user letter character sequence matches the array of derivative grammar rule including the suffix letter character sequence. Otherwise, the user letter character sequence does not match the array of derivative grammar rule.

In accordance with other embodiments of the present invention, the language database stores a plurality of key character sequence corresponding to the letter character sequence of each word. The word searching processing module may compare the user key character sequence with the key character sequences stored in the language database and obtain the words matching the user key character sequence.

It should be noted that other languages in Latin language family can generate derivative words in a manner similar to that of English, the concept and spirit of the present invention is also applicable to all of the languages in Latin language family, such as French, German and Turkish. In view of the foregoing description of the embodiments of the present invention, one ordinary skilled in the art can generate derivative words of the other languages in Latin language family easily.

While the present invention has been illustrated by the above description of the preferred embodiments thereof, while the preferred embodiments have been described in considerable detail, it is not intended to restrict or in any way limit the scope of the appended claims to such details. Other advantages and modifications within the spirit and scope of the present invention will readily appear to those skilled in the art. Therefore, the present invention is not limited to the specific details and the illustrative examples shown and described.

## Claims

1. A method for generating derivative words, the method comprising the steps of:
1) creating a plurality of arrays of derivative grammar rule each comprising a suffix letter character sequence and a condition array having a part of speech corresponding to that of the base words as required by corresponding suffix letter character sequence;
2) inputting a user character sequence;
3) matching the user character sequence with each array of derivative grammar rules and obtaining the arrays of derivative grammar rules which match with the user character sequence;
4) obtaining words meeting the requirement of the condition arrays of the obtained arrays of derivative grammar rules from a language database in accordance with the user character sequence, and generating derivative words via adding the suffix letter character sequences to the obtained words, the suffix letter character sequences being comprised in the arrays of derivative grammar rules which comprise the condition arrays as met by the obtained words.

2. The method of claim 1, wherein the arrays of derivative grammar rules comprise suffix key character sequences corresponding to the suffix letter character sequences according to the function definition of the keys; the user character sequence is a user key character sequence; and in step 3, the user key character sequence is compared with the suffix key character sequence of each array of derivative grammar rules, if the user key character sequence comprises all or part of the key character of the suffix key character sequence at its end, the array of derivative grammar rule comprising the suffix key character sequence is obtained.

3. The method of claim 1, wherein the arrays of derivative grammar rules comprise suffix key character sequences corresponding to the suffix letter character sequences according to the function definition of the keys; the user character sequence is a user key character sequence; and the method further comprises the step of converting the user key character sequence to a user letter character sequence according to the function definition of the keys; wherein in step 3, the user letter character sequence is compared with the suffix letter character sequence of each of the arrays of derivative grammar rules, if the user letter character sequence comprises all or part of the letter character of the suffix letter character sequence at its end, the array of derivative grammar rule comprising the suffix letter character sequence is obtained.

4. The method of claim 1, wherein the user character sequence is a user letter character sequence and, in step 3, the user letter character sequence is compared with the suffix letter character sequence of each of the arrays of derivative grammar rules, if the user letter character sequence comprises all or part of the letter character of the suffix letter character sequence at its end, the array of derivative grammar rule comprising the suffix letter character sequence is obtained.

5. The method of any of claims 2 to 4, wherein the comparison is carried out character by character in an order from back to front.

6. The method of claim 1, wherein the user character sequence is a user key character sequence, and step 4 further comprises the step of: obtaining words matching the user key character sequence from the language database; comparing the part of speech of each of the obtained words with that in each array of derivative grammar rules, and obtaining all of the words having same part of speeches to any one of the part of arrays of derivative grammar rules.

7. The method of claim 1, wherein the user character sequence is a user key character sequence, the user key character sequence is converted to a user letter character sequence according to the function definition of the keys, and step 4 further comprises the steps of: obtaining words matching the user letter character sequence from the language database; comparing the part of speech of each obtained word with that of each array of derivative grammar rules, and obtaining all of the words having same part of speeches to any one of the part of arrays of derivative grammar rules.

8. The method of claim 1, wherein the user character sequence is a user letter character sequence, and step 4 further comprises the steps of: obtaining words matching the user letter character sequence from the language database; comparing the part of speech of each obtained word with that in each array of derivative grammar rules, and obtaining all of the words having same part of speeches to any one of the part of arrays of derivative grammar rules.

9. The method of claim 1, wherein the condition array further comprises a second letter character sequence corresponding to that at the end of the base word as required by the suffix letter character sequence according to the grammar rules.

10. The method of claim 1, wherein each of the arrays of derivative grammar rules further comprises a first letter character sequence which should be deleted from the ends of the base words as required by corresponding suffix letter character sequence according to the grammar rules when the derivative words are generated, step 4 further comprises a step of judging whether the end of one of the obtained words have the first letter character sequence in each of the obtained arrays of derivative grammar rules, if the judge result is yes, the first letter character sequence at the end of the word is deleted and the suffix letter character sequence of the array of derivative grammar rule is added to the end of the remainder so as to generate a derivative word; if the judge result is no, the suffix letter character sequence of the array of derivative grammar rule is added to the end of the word to generate a derivative word.

11. A system for generating derivative words, the system comprising:
an input device used for inputting user character sequences;
a storage for storing a plurality of arrays of derivative grammar rules, each array of derivative grammar rules comprising a suffix letter character sequence and a condition array corresponding to the base words, the condition array comprising a part of speech corresponding to that of the base word as required by the suffix letter character sequence;
a first match processing module, used for matching the user character sequence with each array of derivative grammar rules and obtaining the arrays of derivative grammar rules matching the character information;
a second match processing module used to obtain words from the language database in accordance with the user character sequence, the obtained words meeting the requirement of the condition array in one of the arrays of derivative grammar rules as obtained in the first match processing module;
a derivative processing module, used for adding suffix letter character sequences to the obtained words to generate derivative words, the suffix letter character sequences taken from the arrays of derivative grammar rules comprising the condition arrays met by the words; and
a language database, used for storing words.

12. The system of claim 11, wherein the arrays of derivative grammar rules comprises suffix key character sequences corresponding to the suffix letter character sequences in accordance with the function definition of the keys; the input device is a key input device, and the inputting character information is a user key character sequence; and the first match processing module compares the user key character sequence with the suffix key character sequence of each array of derivative grammar rules, if the user key character sequence comprises all or part of the key character of the suffix key character sequence at its end, the first match processing module obtains the array of derivative grammar rule comprising the suffix key character sequence.

13. The system of claim 11, further comprises a converting processing module used for converting the user key character sequences to user letter character sequences according to the function definition of the keys; the input device is a key input device, the inputting character information is a user key character sequence; the first match processing module compares the user letter character sequence with the suffix letter character sequence of each array of derivative grammar rules, if the user letter character sequence comprises all or part of the letter character of the suffix letter character sequence at its end, the first match processing module obtains the array of derivative grammar rule comprising the suffix letter character sequence.

14. The system of claim 11, wherein the input device is a handwritten input device, the inputting character information is a user letter character sequence; and the first match processing module compares the user letter character sequence with the suffix letter character sequence of each array of derivative grammar rules, if the user letter character sequence comprises all or part of the letter character of the suffix letter character sequence at its end, the first match processing module obtains the array of derivative grammar rule comprising the suffix letter character sequence.

15. The system of any one of claims 12 to 14, wherein the comparison of the first match processing module is carried out character by character in an order from back to front.

16. The system of claim 11, wherein the input device is a key input device, the inputting character information is a user key character sequence; and the second match processing module further comprises:
a word searching processing module, used for obtaining words matching the user key character sequence inputted by the key input device from the language database; and
a first comparing processing module, used for comparing the part of speech of each of the words obtained by the searching processing module with that of each of the arrays of derivative grammar rules obtained by the first match processing module, and obtaining all of the words having the same part of speeches to any one of the part of the arrays of derivative grammar rules.

17. The system of claim 11, further comprises a converting processing module used for converting the user key character sequences to user letter character sequences according to the function definition of the keys; the input device is a key input device, and the inputting character information is a user key character sequence; and the second match processing module further comprises:
a word searching processing module, used for obtaining words matching the user letter character sequence converted by the converting processing module from the language database; and
a first comparing processing module, used for comparing the part of speech of each of the words obtained by the searching processing module with that in each of the arrays of derivative grammar rules obtained by the first match processing module and obtaining all of the words having same part of speeches to any one of the part of arrays of derivative grammar rules.

18. The system of claim 11, wherein the input device is a handwritten input device, the inputting character information is a user letter character sequence, and the second match processing module further comprises:
a word searching processing module, used for obtaining words matching the user letter character sequence inputted by the handwritten input device from the language database; and
a first comparing processing module, used for comparing the part of speech of each of the words obtained by the searching processing module with the part of speech in each of the arrays of derivative grammar rules obtained by the first match processing module, and obtaining all of the words having same part of speeches to any one of the part of arrays of derivative grammar rules.

19. The system of claim 11, wherein the arrays of derivative grammar rules further each comprises a second letter character sequence corresponding to that at the end of the base word as required by the suffix letter character sequence according to the grammar rules.

20. The system of claim 11, wherein each array of derivative grammar rules comprises a first letter character sequence which should be deleted from the ends of the base words according to the grammar rules when the derivative words are generated, as required by the corresponding suffix letter character sequence; and the derivative processing module further comprises:
a second comparing processing module, used for comparing the ends of words obtained by the second match processing module with the first letter character sequences of the arrays of derivative grammar rules obtained by the first match processing module, if one of the words ends with any one of the first letter character sequences, delete the first letter character sequence at the end of the word; and
a generating processing module, used for adding the suffix letter character sequences of the arrays of derivative grammar rules to the words which have been processed by the second comparing processing module to generate derivative words.
